# EUROPÄISCHE PATENTANMELDUNG

(11) **EP 3 936 013 A1**
(43) Veröffentlichungstag der Anmeldung: **12.01.2022**
(21) Anmeldenummer: 21184270.3
(22) Anmeldetag: 07.07.2021
(51) Int. Cl.: A47J 37/07, F24C 15/20

(54) **GRILL UND VERFAHREN**

(30) Priorität: 07.07.2020 DE 102020208495
(71) Anmelder: FRAUNHOFER-GESELLSCHAFT zur Förderung der angewandten Forschung e.V., 80686 München (DE)
(72) Erfinder: ALEYSA, Mohammadshayesh, 70569 Stuttgart (DE)
(74) Vertreter: Friese Goeden Patentanwälte PartGmbB

(57) **Zusammenfassung**

Die Erfindung betrifft einen Grill (1) mit zumindest einer Aufnahmewanne (10) für Brennstoff und mit zumindest einem optionalen Grillrost (11), welcher über der Aufnahmewanne (10) angeordnet ist, wobei der Boden (101) der Aufnahmewanne (10) mit zumindest einer Öffnung (102) versehen ist, wobei der Grill weiterhin zumindest ein Gasführungsrohr (12) mit einem ersten Ende (121) und einem gegenüberliegenden zweiten Ende (122) enthält, wobei das erste Ende (121) oberhalb des Brennstoffes beginnt und das zweite Ende (122) unterhalb des Bodens (101) der Aufnahmewanne (10) mündet und wobei der Grill weiterhin eine Fördereinrichtung (7) enthält, welche dazu eingerichtet ist, einen Luftstrom durch den Grillrost (11), das zumindest eine Gasführungsrohr (12) und die Öffnung (102) der Aufnahmewanne (10) zu erzeugen. Weiterhin betrifft die Erfindung ein Verfahren zum Grillen.

## Beschreibung

Die Erfindung betrifft einen Grill mit zumindest einer Aufnahmewanne für Brennstoff und mit zumindest einem Grillrost, welcher über der Aufnahmewanne angeordnet ist, wobei der Boden der Aufnahmewanne mit zumindest einer Öffnung versehen ist. Weiterhin betrifft die Erfindung ein Verfahren zum Grillen, bei welchem das Grillgut auf einem Grillrost über einem Glutbett angeordnet wird, wobei das Glutbett in einer Aufnahmewanne angeordnet ist und der Boden der Aufnahmewanne mit zumindest einer Öffnung versehen ist. Vorrichtungen und Verfahren dieser Art dienen zum Garen von Lebensmitteln, welche für den menschlichen Verzehr vorgesehen sind.

Aus der Praxis ist bekannt, einen Brennstoff in eine Aufnahmewanne einzubringen und dort zu entzünden. Oberhalb der Aufnahmewanne ist ein Grillrost angeordnet, auf welchem die zu grillenden Lebensmittel angeordnet werden. Durch Einwirkung der durch die Oxidation des Brennstoffs erzeugten Konvektions- und Strahlungswärme wird das Grillgut gebräunt und gegart.

Dieser bekannte Grill weist den Nachteil auf, dass Schadstoffe, welche beim Abbrand des Brennstoffes entstehen, durch den Grillrost und am Grillgut vorbei in die Umgebung entweichen. Dies kann eine hohe Schadstoff- und Feinstaubbelastung zur Folge haben. Tierische Fette, welche vom Grillgut in das Glutbett tropfen, verbrennen oftmals nur unvollständig, wobei kanzerogene Kohlenwasserstoffverbindungen entstehen können, welche sich sowohl am Grillgut als auch in der Umgebung niederschlagen.

Ausgehend vom Stand der Technik liegt der Erfindung somit die Aufgabe zugrunde, einen Grill und ein Verfahren zum Grillen anzugeben, welches eine geringere Umweltbelastung aufweist und/oder eine bessere Grillqualität ermöglicht.

Die Aufgabe wird erfindungsgemäß durch einen Grill gemäß Anspruch 1 und ein Verfahren nach Anspruch 11 gelöst. Vorteilhafte Weiterbildungen der Erfindung finden sich in den Unteransprüchen.

Erfindungsgemäß wird ein Grill mit zumindest einer Aufnahmewanne vorgeschlagen. Die Aufnahmewanne kann aus einem Metall oder einer Legierung gefertigt sein, beispielsweise einer Stahllegierung. In anderen Ausführungsformen der Erfindung kann die Aufnahmewanne aus einem mineralischen Material gefertigt sein, wie z.B. Keramik, Naturstein, Ton, Schamotte oder Beton. Die Aufnahmewanne kann polygonal oder rund geformt sein, insbesondere rechteckig. Die Aufnahmewanne kann ein- oder mehrteilig ausgeführt sein. Dies ermöglicht eine Konstruktion, welche mechanische Spannungen bei Temperaturwechseln vermeidet und so die Maßhaltigkeit der Aufnahmewanne im Betrieb sicherstellt.

Die Aufnahmewanne weist einen Boden auf und ist mit zumindest einer Öffnung versehen. In einigen Ausführungsformen der Erfindung kann die zumindest eine Öffnung im Boden angeordnet sein. In einigen Ausführungsformen der Erfindung kann der Boden eine Mehrzahl von Öffnungen aufweisen. Beispielsweise kann der Boden als Gitter bzw. Rost ausgeführt sein, welcher eine Mehrzahl von Stäben mit dazwischenliegenden Öffnungen bzw. Zwischenräumen aufweist. In anderen Ausführungsformen der Erfindung kann der Boden eine ein- oder mehrteilige Blechkonstruktion sein, welche mit polygonalen oder runden Bohrungen bzw. Schlitzen versehen ist. Der Boden der Aufnahmewanne ermöglicht somit, einen Brennstoff an einer vorgebbaren Stelle zu positionieren. Durch die Öffnungen im Boden kann ein Luftaustausch zwischen dem Brennstoff bzw. dem durch den Brennstoff gebildeten Glutbett und der Umgebung erfolgen. Weiterhin kann Asche durch die zumindest eine Öffnung abgeführt werden.

Der erfindungsgemäße Grill wird mit zumindest einem festen oder gasförmigen Brennstoff betrieben. In einigen Ausführungsformen der Erfindung kann hierzu innerhalb der Aufnahmewanne zumindest ein Gasbrenner angeordnet sein. Der Gasbrenner kann nach oben durch eine Metallkonstruktion und/oder mineralisches Material, wie beispielsweise Lavasteine, abgedeckt sein.

In anderen Ausführungsformen der Erfindung kann ein fester Brennstoff verwendet werden, beispielsweise Scheitholz und/oder Holzkohle und/oder Holzkohlebriketts. Der Brennstoff wird bei Betrieb des Grills auf dem Boden der Aufnahmewanne angeordnet.

Oberhalb der Aufnahmewanne und damit oberhalb des durch den Brennstoff gebildeten Glutbetts befindet sich zumindest ein optionaler Grillrost, auf welchem das zu garende Grillgut angeordnet wird. Auch der Grillrost kann aus einem Metall oder einer Legierung bestehen, beispielsweise einem Edelstahl oder einer anderen Stahllegierung. Der Grillrost kann optional mit einer Hartverchromung versehen sein, um einen korrosiven Angriff durch säurehaltige Lebensmittel zu vermeiden.

Erfindungsgemäß wird nun vorgeschlagen, den Grill weiterhin mit einer Fördereinrichtung auszustatten, welche dazu eingerichtet ist, einen Luftstrom durch den optionalen Grillrost und die zumindest eine Öffnung der Aufnahmewanne zu erzeugen. Nach dem Stand der Technik bildet sich eine konvektive Luftströmung über dem Glutbett aus, d.h. Umgebungsluft tritt von unten oder seitlich durch die zumindest eine Öffnung in der Aufnahmewanne in das Glutbett ein, durchströmt das Glutbett und verlässt dieses nach oben durch den Grillrost. Hierdurch wird dem Brennstoff das erforderliche Oxidationsmittel in der Form von Luftsauerstoff zugeführt. Die erfindungsgemäße Fördereinrichtung kehrt diese Luftströmung um, d.h. Umgebungsluft strömt durch den Grillrost in das Glutbett und verlässt das Glutbett durch die zumindest eine Öffnung der Aufnahmewanne. Dieses Merkmal hat die Wirkung, dass beim Grillen entstehende Gerüche und Dämpfe zumindest teilweise durch das Glutbett abgeleitet werden. Hierbei kommt es zur Nachoxidation von Fetten und Geruchsstoffen, so dass weniger gesundheitsschädlicher Grillrauch in die Umgebung abgegeben wird. Sofern Fett vom Grillgut in das Glutbett tropft, wird die Flamme von der durch die Fördereinrichtung erzeugten Luftströmung unter das Glutbett gezogen, ähnlich wie bei einem an sich bekannten Unterbrandheizkessel. Hierdurch wird direkte Flammeinwirkung auf das Grillgut verhindert, so dass dieses nicht verbrennt. Darüber hinaus werden kanzerogene Oxidationsprodukte vom Grillgut und vom Benutzer ferngehalten.

Erfindungsgemäß enthält der Grill weiterhin zumindest ein optionales Gasführungsrohr, welches sich zumindest von der zumindest einen Öffnung im Boden der Aufnahmewanne bis über die Ebene des Brennstoffes oder der Brennstoffschüttung in der Aufnahmewanne erstreckt. Das Gasführungsrohr kann einen polygonalen oder runden Querschnitt aufweisen. Eine Mehrzahl von Gasführungsrohren kann in einer Matrix gleichmäßig oder ungleichmäßig über die Fläche des Grillrostes und der Aufnahmewanne angeordnet sein. In einigen Ausführungsformen der Erfindung kann das Gasführungsrohr in Form eines Schlitzes über die komplette Tiefe des Grillrostes verlaufen. Dieses Merkmal hat die Wirkung, dass am Grillgut entstehender Grillrauch mit geringen Strömungswiderständen in die Oxidationskammer abgesaugt werden kann, da nicht die gesamte vom Grillrost angesaugte Luftmenge durch das Glutbett geführt werden muss. Der so verringerte Strömungswiderstand kann die Strömungsgeschwindigkeit erhöhen und so die Absaugung des Grillrauches verbessern.

In einigen Ausführungsformen der Erfindung kann ein erster Teilstrom der von der Fördereinrichtung geförderten Luftmenge durch das Glutbett geführt sein und ein zweiter Teilstrom der von der Fördereinrichtung geförderten Luftmenge kann seitlich am Glutbett vorbei unter das Glutbett geführt und dort mit dem ersten Teilstrom gemischt werden. Das bei der Glutbettvorbereitung sowie beim Grillvorgang entstehende Abgas kann dann unterhalb des Glutbettes oxidiert werden.

Die Fördereinrichtung kann zumindest einen an sich bekannten Radial- oder Axiallüfter enthalten. Die Fördereinrichtung kann mehrstufig aufgebaut sein und zumindest eine Niederdruckstufe und eine nachfolgende Hochdruckstufe aufweisen.

In einigen Ausführungsformen der Erfindung kann unterhalb der Aufnahmewanne eine Oxidationskammer mit einem Einlass und einem Auslass angeordnet sein, wobei dem Einlass das aus der zumindest einen Öffnung der Aufnahmewanne austretende Abgas zuführbar ist. Darüber hinaus kann die Oxidationskammer einen Oxidationsmitteleinlass aufweisen, durch welchen ein Oxidationsmittel aus einer Oxidationsmittelzufuhreinrichtung zuführbar ist. Das Oxidationsmittel kann beispielsweise Sauerstoff, Umgebungsluft oder Ozon sein. Dieses Merkmal hat die Wirkung, dass oxidierbare Bestandteile des als Abgas abgeführten Grillrauchs, beispielsweise Kohlenwasserstoffe aus dem Abbrand tierischer Fette, welche im Glutbett noch nicht vollständig oxidiert wurden, innerhalb der Oxidationskammer nachoxidiert werden. Hierzu werden die heißen Rauchgase mit dem Oxidationsmittel umgesetzt. Da die Rauchgase nach dem Durchtritt durch das Glutbett eine Temperatur von beispielsweise mehr als 300°C oder mehr als 400°C oder mehr als 600°C aufweisen, kann die Nachoxidation allein durch Zugabe eines Oxidationsmittels ohne weitere Zündquelle erfolgen.

In einigen Ausführungsformen der Erfindung kann die Oxidationsmittelzufuhreinrichtung eine Druckgasflasche mit nachfolgendem Druckminderer und Dosierventil aufweisen. In anderen Ausführungsformen der Erfindung kann die Oxidationsmittelzufuhreinrichtung einen Ozongenerator enthalten oder daraus bestehen. In wiederum anderen Ausführungsformen der Erfindung kann die Oxidationsmittelzufuhreinrichtung ein Dosierventil und/oder eine Fördereinrichtung sein oder eine solche enthalten, durch welche Umgebungsluft in definierter Menge zugeführt werden kann. Die durch die Oxidationsmittelzufuhreinrichtung in die Oxidationskammer zugeführte Menge des Oxidationsmittels kann in Abhängigkeit der Temperatur und/oder des Betriebszustandes des Grills und/oder des Schadstoffanfalls gesteuert oder geregelt werden. Hierzu kann in einigen Ausführungsformen in der Oxidationskammer zumindest ein Sensor vorhanden sein, welcher die Zusammensetzung des aus der Aufnahmewanne austretenden Rauchgases und/oder dessen Temperatur und/oder einen Trübungswert misst. Dies erlaubt eine genaue Kontrolle des zugeführten Oxidationsmittels, so dass ein kostengünstiger Betrieb mit geringem Schadstoffanfall ermöglicht wird.

In einigen Ausführungsformen der Erfindung kann der Einlass der Oxidationskammer einen größeren Querschnitt aufweisen als der Auslass. Die Oxidationskammer kann somit gewissermaßen trichterförmig geformt sein, so dass diese durch einen großflächigen Einlass, welcher in etwa dem Querschnitt der Aufnahmewanne entspricht, das Rauchgas über die gesamte Fläche des Glutbetts absaugt und den Gasstrom über einen kleineren Rohrquerschnitt austreten lässt, welcher in einfacher Weise weiteren Elementen der Abgasnachbehandlungseinrichtung zugeführt werden kann.

In einigen Ausführungsformen der Erfindung kann der Oxidationskammer mittels zumindest einer zusätzlichen Energiequelle weitere Wärme zugeführt werden, um eine vorgebbare Oxidationstemperatur der brennbaren staub- und gasförmigen Schadstoffe einzustellen. Die zusätzliche Energiequelle kann beispielsweise zumindest einen temperaturgeregelten Gasbrenner enthalten oder daraus bestehen.

In einigen Ausführungsformen der Erfindung kann innerhalb des Gasführungsrohres zumindest ein Katalysator angeordnet sein. Der zumindest eine Katalysator kann in einigen Ausführungsformen der Erfindung ein Edelmetallkatalysator sein. Beispielsweise kann der Edelmetallkatalysator ausgewählt sein aus Vanadium und/oder Platin. Da das Gasführungsrohr durch das Glutbett geführt ist, wird das Gasführungsrohr durch den Brennstoff beheizt, so dass sich im Inneren des Gasführungsrohres Temperaturen ausbilden, bei welchen der angesaugte Grillrauch durch den Katalysator umgesetzt werden kann, insbesondere durch Oxidationsreaktionen. Hierdurch kann der Grillrauch bereits teilweise aufoxidiert werden, so dass in der Oxidationskammer selbst nur noch im geringen Umfang nachoxidiert werden muss. In einigen Ausführungsformen der Erfindung kann dadurch auch auf die Zufuhr eines Oxidationsmittels in die Oxidationskammer verzichtet werden.

In einigen Ausführungsformen der Erfindung enthält der Grill weiterhin einen Zyklonabscheider mit einem Einlass und einem Auslass, wobei der Einlass des Zyklonabscheiders mit der Oxidationskammer verbunden ist. Hierdurch können Stäube und Aschepartikel sowie im Abgas verbleibende Fetttröpfchen abgeschieden werden, so dass diese nachfolgende Komponenten der Abgasnachbehandlung nicht verunreinigen und/oder nicht in die Atmosphäre gelangen. In einigen Ausführungsformen der Erfindung kann vor oder nach dem Zyklonabscheider eine Agglomerationseinrichtung angeordnet sein, welche beispielsweise durch Einwirkung elektrischer Felder auf das Abgas die im Abgas vorhandenen Feinstäube zu größeren Clustern agglomeriert, so dass diese im Zyklonabscheider leichter aus dem Gasstrom abgeschieden werden können.

In einigen Ausführungsformen der Erfindung enthält der Grill weiterhin zumindest einen Wärmetauscher mit einem Einlass und einem Auslass, wobei der Einlass des Wärmetauschers mit dem Auslass der Oxidationskammer und/oder des Zyklonabscheiders verbunden ist. Ein solcher Wärmetauscher kann das Abgas kühlen, so dass nachfolgende Komponenten mit geringerer thermischer Last beaufschlagt werden. Alternativ oder zusätzlich kann die im Abgas des Grills enthaltene Wärme an ein Wärmeträgermedium abgegeben und genutzt werden, beispielsweise zur Brauchwassererwärmung, zur Raumheizung oder für Gar- oder Trocknungsprozesse. In einigen Ausführungsformen der Erfindung kann der Wärmetauscher selbstreinigend sein, um das Wartungsintervall des Grills zu verlängern. In einigen Ausführungsformen der Erfindung kann der Zyklonabscheider und/oder ein zusätzlicher Nassabscheider vor dem Wärmetauscher angeordnet sein, um auf diese Weise die Verschmutzung des Wärmetauschers zu verringern.

In einigen Ausführungsformen der Erfindung enthält der Grill weiterhin einen Geruchsfilter mit einem Einlass und einem Auslass, wobei der Einlass des Geruchsfilters mit dem Auslass der Oxidationskammer und/oder dem Auslass des Zyklonabscheiders und/oder dem Auslass des Wärmetauschers verbunden ist. Der Geruchsfilter kann störende Gerüche binden, so dass eine Belästigung der Umwelt geringer ausfällt oder ganz entfällt.

In einigen Ausführungsformen der Erfindung enthält der Geruchsfilter Aktivkohle und/oder Holzkohle und/oder Holzkohlebriketts als Filtermaterial. Dieses Merkmal hat die Wirkung, dass das Filtermaterial nach seiner Benutzung als Brennstoff im Grill verwendet werden kann, so dass Entsorgungskosten eingespart werden können. Darüber hinaus ist die Verwendung von Holzkohle bzw. Holzkohlebrikett erheblich kostengünstiger als die Verwendung von Aktivkohle, so dass die Betriebskosten des Grills sinken.

In einigen Ausführungsformen der Erfindung kann am jeweils letzten Element der Abgasreinigung, also am Auslass der Oxidationskammer oder des Zyklonabscheiders oder des Wärmetauschers oder des Geruchsfilters ein Abgasrohr ansetzen, in welchem die Fördereinrichtung angeordnet ist. Die Fördereinrichtung kann somit entfernt vom Grill angeordnet sein, so dass die Geräuschentwicklung in der Umgebung des Grills nicht störend wahrgenommen wird. Darüber hinaus kann die Fördereinrichtung hinter der Abgasreinigung angeordnet werden, so dass sich deren Wartungsintervalle verlängern, da eine übermäßige Verschmutzung durch Rauchgase und von Rauchgasen transportierten Fetten und anderen Rückständen vermieden wird.

In einigen Ausführungsformen der Erfindung kann die Fördereinrichtung ein Radiallüfter oder ein Axiallüfter sein. Diese können ein vergleichsweise großes Volumen bei geringem Differentialdruck fördern, so dass das Glutbett gleichmäßig mit Luftsauerstoff durchströmt wird und ein schadstoffarmer Abbrand sichergestellt wird.

In einigen Ausführungsformen der Erfindung kann das Abgasrohr über die Dachfläche des Gebäudes geführt sein, in welchem der Grill aufgestellt ist. Dies ermöglicht einen Abtransport der Abgase ohne störende Beeinträchtigung der Umgebung.

In einigen Ausführungsformen der Erfindung kann der Grill weiterhin einen Abzugskamin enthalten, welcher oberhalb des Grillrostes angeordnet ist. Der Abzugskamin kann mit einer Leitung mit dem Abgasrohr verbunden sein. Dies ermöglicht es, Abgase beiderseits des Grillrostes abzuführen, nämlich sowohl nach unten durch das Glutbett als auch in an sich bekannter Weise nach oben durch den Abzugskamin.

In einigen Ausführungsformen der Erfindung kann in der Leitung des Abzugskamins eine Abgasklappe angeordnet sein. Hierdurch kann die Strömung durch den Abzugskamin im Normalbetrieb unterbunden sein, so dass das Abgas vollständig durch das Glutbett und die vorstehend beschriebene Abgasreinigungsvorrichtung abgeführt wird. Im Störungsfall kann die Abgasklappe geöffnet werden, so dass die Rauchgase in an sich bekannter Weise über den Abzugskamin abgeführt werden, ohne dass es auch bei Ausfall oder Wartung der erfindungsgemäßen Abgasreinigungsvorrichtung nicht zur Gefährdung von Personen in der Umgebung des Grills kommt.

In einigen Ausführungsformen der Erfindung kann der Grill weiterhin eine Steuer- oder Regeleinrichtung enthalten, welche dazu eingerichtet ist, die von der Fördereinrichtung geförderte Gasmenge in Abhängigkeit von zumindest einem Betriebsparameter zu steuern oder zu regeln. Hierdurch kann beispielsweise die Temperatur des Glutbetts und/oder die Abbranddauer des Brennstoffs und/oder der Schadstoffgehalt des Abgases kontrolliert werden.

In einigen Ausführungsformen der Erfindung kann die Fördereinrichtung einen ersten Betriebszustand und einen zweiten Betriebszustand aufweisen, wobei die geförderte Gasmenge im ersten Betriebszustand höher ist als im zweiten Betriebszustand. Somit kann in einem Stand-By-Zustand, in welchem sich kein Grillgut auf dem Grillrost befindet, die geförderte Luftmenge reduziert werden, um das Glutbett zu schonen. In einem Betriebszustand, bei welchem eine erhöhte Grilltemperatur benötigt wird und Schadstoffe effizient abgeführt werden sollen, kann die geförderte Gasmenge erhöht werden, so dass durch höheren Luftdurchsatz die Temperatur des Glutbettes ansteigt und/oder die Reinigungswirkung nachgeschalteter Abgasreinigungskomponenten erhöht ist. Nachfolgend soll die Erfindung anhand von Figuren ohne Beschränkung des allgemeinen Erfindungsgedankens näher erläutert werden. Dabei zeigt
Fig. 1 eine schematische Darstellung eines an sich bekannten Grills.
Fig. 2 zeigt eine schematische Darstellung eines Grills gemäß der vorliegenden Erfindung in einer ersten Ausführungsform.
Fig. 3 zeigt eine schematische Darstellung eines Grills gemäß der vorliegenden Erfindung in einer zweiten Ausführungsform.
Fig. 4 zeigt eine erfindungsgemäße Abgasreinigung in einer ersten Ausführungsform.
Fig. 5 zeigt eine erfindungsgemäße Abgasreinigung in einer zweiten Ausführungsform.
Fig. 6 zeigt eine erfindungsgemäße Abgasreinigung in einer dritten Ausführungsform.
Fig. 7 zeigt eine erfindungsgemäße Abgasreinigung in einer vierten Ausführungsform.
Fig. 8 zeigt eine erfindungsgemäße Abgasreinigung in einer fünften Ausführungsform.
Fig. 9 zeigt eine Konstruktionszeichnung des Grills gemäß der ersten Ausführungsform in der Ansicht.
Fig. 10 zeigt eine Konstruktionszeichnung des Grills gemäß der ersten Ausführungsform im Schnitt.
Fig. 11 zeigt einen Ausschnitt aus der Konstruktionszeichnung des Grills gemäß der ersten Ausführungsform.

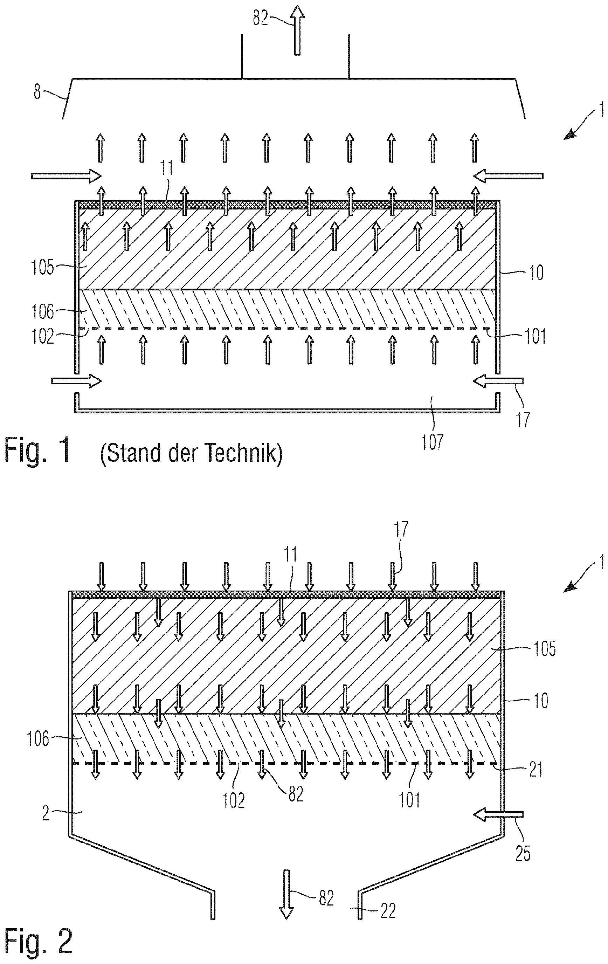

Anhand der Fig. 1 wird ein Grill gemäß dem Stand der Technik näher erläutert. Der Grill 1 weist zumindest eine Aufnahmewanne 10 auf, welche zur Aufnahme eines Brennstoffs vorgesehen ist. Die Aufnahmewanne 10 ist oben offen und weist einen Boden 101 auf, in welchem zumindest eine Öffnung 102 vorhanden ist. Der Boden 101 ist im dargestellten Ausführungsbeispiel als Feuerrost ausgeführt, so dass die Öffnungen durch die Abstände zwischen den einzelnen Stäben des Rostes gebildet sind.

In der Aufnahmewanne befindet sich ein fester Brennstoff, beispielsweise Holzkohlebriketts oder Holzkohle oder Scheitholz oder Holzpellets, welcher ein Glutbett 105 bildet. Durch den Abbrand des Brennstoffes entsteht ein Aschebett 106 unterhalb des Glutbetts 105.

Oben auf der Aufnahmewanne 10 ist ein Grillrost 11 angeordnet, auf welchen das Grillgut 115 aufgelegt werden kann, so dass dieses der vom Glutbett 105 ausgehenden Wärme ausgesetzt wird.

Unterhalb der Aufnahmewanne 10 befindet sich ein Aschekasten 107, welcher seitliche Öffnungen aufweist. Durch diese seitlichen Öffnungen kann Verbrennungsluft 17 aus der Umgebung einströmen.

Die Verbrennungsluft 17 wird durch die sich ausbildende Konvektionsströmung angesaugt, durchströmt die Öffnungen 102 im Boden 101 der Aufnahmewanne 10 und durchströmt zunächst das Aschebett 106 und sodann das Glutbett 107 und verlässt die Aufnahmewanne 10 durch den Grillrost 11. Das Abgas 82 wird zusammen mit dem entstehenden Grillrauch in den Abzugskamin 8 abgeführt.

Der in Fig. 1 gezeigte Grill weist den Nachteil auf, dass entstehende Schadstoffe und Feinstäube im Abgas 82 ungefiltert in die Umgebung entweichen. Darüber hinaus wird oberhalb des Grillrostes 11 Falschluft angesaugt, welche das Abgas 82 stark verdünnt und dabei das Volumen erheblich vergrößert, so dass eine Abgasreinigung aufwendig und teuer wäre. Darüber hinaus entstehen durch unvollständige Oxidation abtropfender Tierfette im Glutbett 105 Schadstoffe, welche auf das Grillgut 115 einwirken und dort gesundheitsschädliche Rückstände bilden.

Fig. 2 zeigt einen erfindungsgemäßen Grill in einer ersten Ausführungsform. Gleiche Bestandteile der Erfindung sind mit gleichen Bezugszeichen versehen, so dass sich die Beschreibung auf die wesentlichen Unterschiede beschränkt.

Auch der erfindungsgemäße Grill weist eine Aufnahmewanne 10 auf, in welcher sich ein Glutbett 105 befindet. Unterhalb des Glutbettes 105 bildet sich ein Aschebett 106 aus den Brennstoffrückständen des Glutbettes 105 aus.

Wie Fig. 2 zeigt, befindet sich unterhalb der Aufnahmewanne 10 eine Oxidationskammer 2 mit einem Einlass 21 und einem Auslass 22. Der Einlass 21 weist in etwa dieselbe Form und Größe auf wie die Aufnahmewanne 10 und schließt an den Boden 101 der Aufnahmewanne 10 an.

Der Auslass 22 weist gegenüber dem Einlass 21 einen geringeren Querschnitt auf, so dass die Oxidationskammer 2 in etwa trichterförmig ausgeformt ist. Auch die Oxidationskammer 2 kann aus einem Metall oder einer Legierung gefertigt sein, beispielsweise einer Aluminiumlegierung oder einem Stahl. Die Oxidationskammer 2 kann aus Blech und/oder aus zumindest einem Gussteil gefertigt sein. Die Oxidationskammer 2 kann mit einer optionalen Wärmedämmung versehen sein, um Wärmeverluste zu verringern und die Temperatur im Inneren der Oxidationskammer 2 oberhalb eines vorgebbaren Grenzwertes zu halten.

Durch eine nicht dargestellte Fördereinrichtung wird ein Abgasstrom 82 am Auslass 22 der Oxidationskammer 2 erzeugt. Die Verbrennungsluft 17 strömt somit von oben durch den Grillrost 11, durch das Glutbett 105, durch das Aschebett 106 und durch die Öffnungen 102 im Boden 101 der Aufnahmewanne 10 in die Oxidationskammer 2. Die Strömung der Verbrennungsluft kehrt sich somit gegenüber bekannten Grills um. Dieses Merkmal hat die Wirkung, dass entstehender Grillrauch durch das Glutbett 105 nach unten in die Oxidationskammer 2 abgeführt und dabei bei hohen Temperaturen innerhalb des Glutbettes 105 nachoxidiert wird. Weiterhin wird der durch das Abtropfen tierischer Fette entstehende Fettbrand nach unten in die Oxidationskammer 2 gezogen, so dass auf der dem Grillrost 11 zugewandten Seite des Glutbettes 105 keine offene Flamme entsteht. Dadurch wird das Entstehen kanzerogener Kohlenwasserstoffverbindungen in der Nähe des Grillgutes verhindert. Ebenso erfolgt keine unmittelbare Flammeinwirkung auf das Grillgut auf dem Grillrost 11. Dadurch kann die Bildung kanzerogener Krusten auf dem Grillgut verhindert oder zumindest reduziert werden.

Fig. 2 zeigt weiterhin einen Oxidationsmitteleinlass 25, durch welchen ein zusätzliches Oxidationsmittel in die Oxidationskammer 2 eingeführt werden kann. Das zusätzliche Oxidationsmittel kann ausgewählt sein aus Ozon und/oder Sauerstoff und/oder Umgebungsluft. Hierdurch werden Schadstoffe, welche im Glutbett 105 noch nicht vollständig aufoxidiert wurden, nachoxidiert, so dass das Abgas 82 im Wesentlichen aus Asche bzw. Stäuben, Sauerstoff, Kohlendioxid und Wasser besteht.

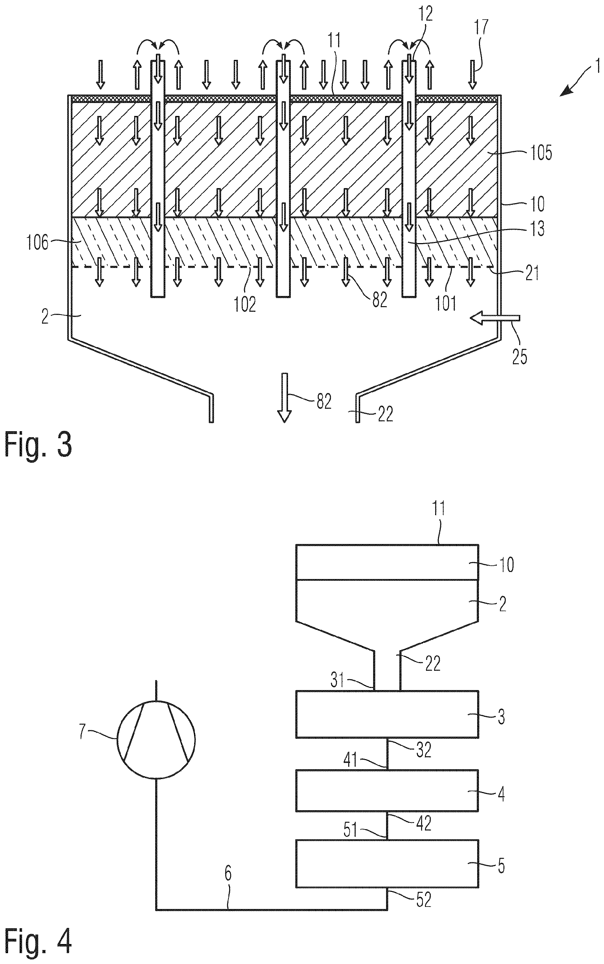

Anhand der Fig. 3 wird eine zweite Ausführungsform eines erfindungsgemäßen Grills näher erläutert. Gleiche Bestandteile der Erfindung sind mit gleichen Bezugszeichen versehen, so dass sich die nachfolgende Beschreibung auf die wesentlichen Unterschiede beschränkt.

Auch die zweite Ausführungsform verwendet eine Aufnahmewanne 10, in welche ein Brennstoff eingebracht werden kann, welcher bei Betrieb des Grills ein Glutbett 105 ausbildet. Oberhalb des Glutbettes 105 befindet sich ein Grillrost 11. Unterhalb des Glutbettes 105 befindet sich das Aschebett 106, welches auf dem Boden 101 der Aufnahmewanne 10 zu liegen kommt. Im Boden 101 befinden sich Öffnungen 102, durch welche das Abgas 82 der Oxidationskammer 2 zugeführt werden kann.

Die zweite Ausführungsform unterscheidet sich von der ersten Ausführungsform im Wesentlichen darin, dass weiterhin zumindest ein Gasführungsrohr 12 vorhanden ist, welches sich zumindest von der Öffnung 102 bis über die Ebene des Grillrostes 11 erstreckt. Innerhalb des Gasführungsrohres 12 kann zumindest ein optionaler Katalysator 13 angeordnet sein, welcher beispielsweise ein Edelmetallkatalysator sein kann. Ein solcher Edelmetallkatalysator kann ausgewählt sein aus Vanadium und/oder Platin.

Das zumindest eine Gasführungsrohr 12 kann einen polygonalen oder runden Querschnitt aufweisen. In einigen Ausführungsformen der Erfindung können die Abmessungen in den beiden Raumrichtungen der Ebene des Grillrostes 11 stark unterschiedlich sein, so dass sich der optische Eindruck eines länglichen Schlitzes ergibt. In anderen Ausführungsformen der Erfindung kann der Querschnitt auch rund sein, so dass eine Mehrzahl von Gasführungsrohren 12 in einem regelmäßigen Raster bzw. einer Matrix in der Fläche des Grillrostes 11 angeordnet sein können.

Das Gasführungsrohr kann in einigen Ausführungsformen eine Länge von etwa 15 cm bis etwa 20 cm haben. Es kann die Oberkannte des Glutbettes bzw. der Brennstoffschüttung etwa 3 cm bis etwa 6 cm überragen. Benachbarte Gasführungsrohre können einen Abstand von etwa 6 cm bis etwa 13 cm zueinander aufweisen. Der Durchmesser bzw. die Breite eines Gasführungsrohres 12 kann zwischen etwa 1 cm und etwa 4 cm oder zwischen etwa 1,5 cm und etwa 2,5 cm betragen.

Die Gasführungsrohre 12 haben die Wirkung, dass eine größere Strömungsgeschwindigkeit zwischen dem Grillrost 11 und der Oxidationskammer 2 erzeugt wird, so dass entstehender Grillrauch mit größerer Effizienz abgesaugt wird. Der Grillrauch kann bereits innerhalb des Gasführungsrohres 12 durch den Katalysator 13 zumindest teilweise oxidiert werden, so dass in der Oxidationskammer 2 nur noch eine geringe Schadstoffkonzentration zur Nachoxidation durch das Oxidationsmittel 25 ansteht.

Anhand der Figuren 4, 5, 6, 7 und 8 werden unterschiedliche Ausführungsformen der Abgasnachbehandlung des aus der Oxidationskammer 2 austretenden Abgases näher erläutert. Auch hierbei sind gleiche Bestandteile der Erfindung mit gleichen Bezugszeichen versehen, so dass sich die nachfolgende Beschreibung auf die wesentlichen Unterschiede beschränken kann.

In der in Fig. 4 gezeigten Ausführungsform ist der Auslass 22 der Oxidationskammer mit einem Einlass 31 eines Zyklonabscheiders 3 verbunden. Der Zyklonabscheider 3 dient dazu, Stäube, insbesondere aus dem Aschebett 106, effizient abzuscheiden, so dass diese nicht in die Umgebung gelangen können. Hierzu kann ein Radialzyklon oder ein Axialzyklon verwendet werden. Optional kann am Eingang des Zyklons 31 ein Agglomerator angeordnet sein, welcher Feinstäube zu größeren Partikeln agglomeriert, welche im nachfolgenden Zyklonabscheider 3 einfacher abgeschieden werden können. Optional kann der Zyklonabscheider 3 auch ein Nassabscheider sein, welcher Staubpartikel in einer Flüssigkeit, insbesondere Wasser, bindet. Nach dem Abscheiden von Stäuben verlässt der Abgasstrom den Zyklonabscheider 3 durch dessen Auslass 32.

Der Auslass 32 des Zyklonabscheiders ist mit dem Einlass 41 eines Wärmetauschers 4 verbunden. Der Wärmetauscher 4 kann einerseits dazu dienen, die Abgastemperatur so weit zu senken, dass eine Beschädigung nachfolgender Komponenten vermieden wird. Darüber hinaus kann der Wärmetauscher 4 die Abwärme des Grills 1 nutzbar machen, beispielsweise für die Brauchwassererwärmung, für Trocknungsprozesse oder zur Beheizung von Warmhalteplatten oder auch zur Raumheizung. Hierzu kommen sämtliche bekannten Bauformen eines Wärmetauschers in Frage, insbesondere Kreuzstromwärmetauscher oder Gegenstromwärmetauscher. Im Wärmetauscher werden zwei Fluidströme, nämlich der Abgasstrom einerseits und ein Wärmeträgerfluid andererseits durch Wandungen getrennt geführt, so dass Wärme aus dem Abgasstrom in das Wärmeträgerfluid abgegeben werden kann.

Der abgekühlte Abgasstrom verlässt den Wärmetauscher 4 über den Auslass 42. Der Auslass 42 des Wärmetauschers ist mit dem Einlass 51 eines Geruchsfilters 5 verbunden. Der Geruchsfilter 5 kann dazu dienen, beim Grillvorgang entstehende, störende Gerüche zu binden und so deren Entweichen in die Umwelt zu vermeiden. Hierzu kann der Geruchsfilter 5 beispielsweise Aktivkohle und/oder Holzkohle und/oder Holzkohlebriketts als Filtermaterial enthalten. Dieses Merkmal hat die Wirkung, dass das Filtermaterial nach seiner Sättigung mit Geruchsstoffen als Brennstoff in die Aufnahmewanne 10 überführt werden kann, so dass kein zusätzlicher Abfall anfällt. In anderen Ausführungsformen der Erfindung kann selbstverständlich auch jedes andere bekannte Filtermaterial verwendet werden. Der Abgasstrom verlässt den Geruchsfilter 5 sodann über dessen Auslass 52.

Am Auslass 52 des Geruchsfilters 5 setzt ein Abgasrohr 6 an, in welchem die Fördereinrichtung 7 angeordnet ist. Die Fördereinrichtung 7 kann beispielsweise ein Dachlüfter sein, so dass ein geräuscharmer Betrieb des Grills ohne störendes Lüftergeräusch möglich ist. Hierzu kann die Fördereinrichtung 7 ein an sich bekannter Radial- oder Axiallüfter sein. Die Fördereinrichtung 7 kann mehrstufig ausgeführt sein und hierdurch die Druckdifferenz im Abgasrohr 6 vergrößern.

Durch die Anordnung der Fördereinrichtung 7 im Abgasrohr 6 kommt diese nur mit Abgas in Kontakt, welches die vorstehend beschriebenen Reinigungsstufen in der Oxidationskammer 2, dem Zyklonabscheider 3, dem Wärmetauscher 4 und dem Geruchsfilter 5 bereits durchlaufen hat, so dass eine Verschmutzung oder eine thermische Belastung der Fördereinrichtung 7 minimiert oder ausgeschlossen ist. Dies kann das Wartungsintervall der Fördereinrichtung 7 verlängern.

Selbstverständlich kann die in Fig. 4 gezeigte Abgasnachbehandlung noch erweitert werden, indem nach dem Geruchsfilter 5 weitere, an sich bekannte Filterkomponenten, angeordnet sind, beispielsweise Trocken- oder Nassabscheider.

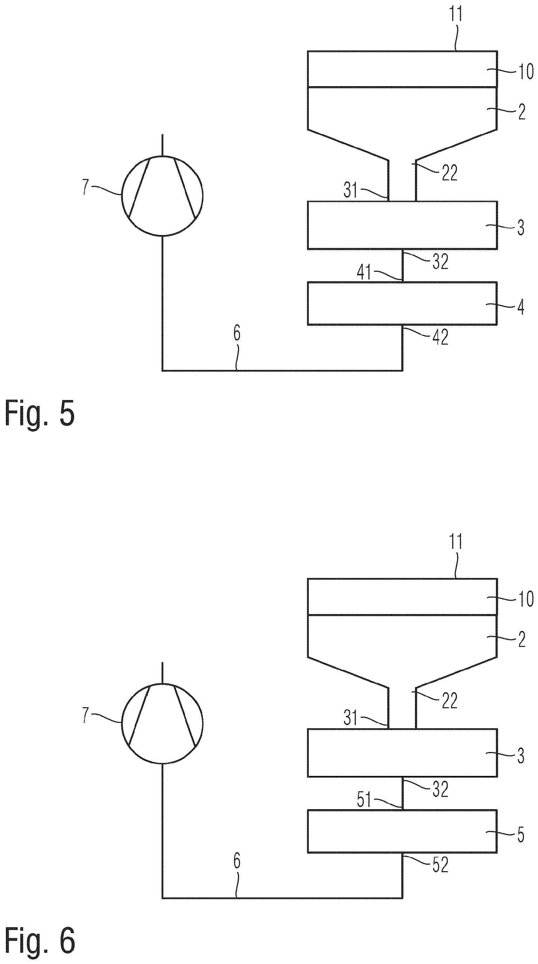

Die in Fig. 5 gezeigte Ausführungsform verzichtet auf einen Geruchsfilter 5. Vielmehr strömt das Abgas von der Oxidationskammer 2 unmittelbar in den Zyklonabscheider 3 und von dort in den Wärmetauscher 4. Diese vereinfachte Ausführungsform kann ausreichend sein, wenn das Abgasrohr 6 in einem Dachkamin endet und so eine Geruchsbelästigung der näheren Umgebung nicht zu erwarten ist.

Die in Fig. 6 gezeigte Ausführungsform verzichtet auf den Wärmetauscher 4. In diesem Fall strömt das Abgas von der Oxidationskammer 2 direkt in den Zyklonabscheider 3 und von diesem weiter in den Geruchsfilter 5. Auf eine zusätzliche Kühlung des Abgases bzw. eine Restwärmenutzung wird verzichtet, was den benötigten Bauraum minimiert und den Fertigungs- und Betriebsaufwand verringert.

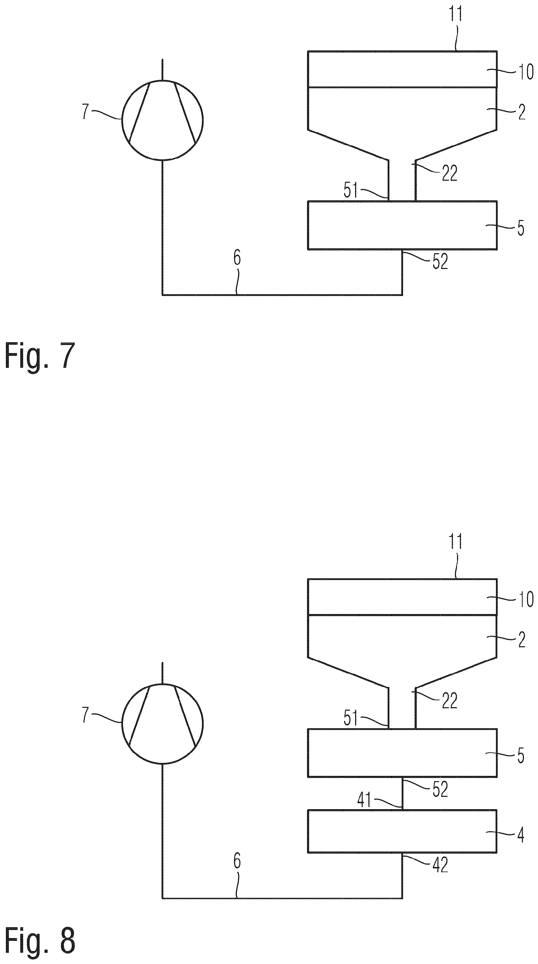

Die in Fig. 7 gezeigte Ausführungsform verzichtet auf einen Zyklonabscheider und einen Wärmetauscher. Das aus der Oxidationskammer 2 austretende Abgas wird unmittelbar einem Geruchsfilter 5 zugeführt, welcher beispielsweise mit Holzkohle und/oder einem Filtervlies betrieben wird. Der Filter 5 bindet somit nicht nur störende Gerüche, sondern auch Stäube, so dass sich ein besonders einfacher Aufbau des erfindungsgemäßen Grills ergibt.

Die in Fig. 8 gezeigte Ausführungsform zeigt eine Oxidationskammer 2, welche unmittelbar mit einem Geruchsfilter 5 verbunden ist, wie anhand der vorstehenden Ausführungsform beschrieben. Der Ausgang 52 des Geruchsfilters 5 ist mit einem Eingang 41 des Wärmetauschers 4 verbunden. Am Ausgang 42 des Wärmetauschers 4 setzt das Abgasrohr 6 an. Somit kombiniert die Ausführungsform gemäß Fig. 8 eine einfache Filtereinrichtung mit einer Restwärmenutzung und Abgaskühlung.

Anhand der vorstehend beschriebenen Ausführungsvarianten wird der Fachmann leicht weitere, nicht detailliert beschriebene Anordnungen der einzelnen Komponenten der Abgasreinigung finden. Die Beschreibung ist insofern nicht als beschränkend, sondern als erläuternd anzusehen.

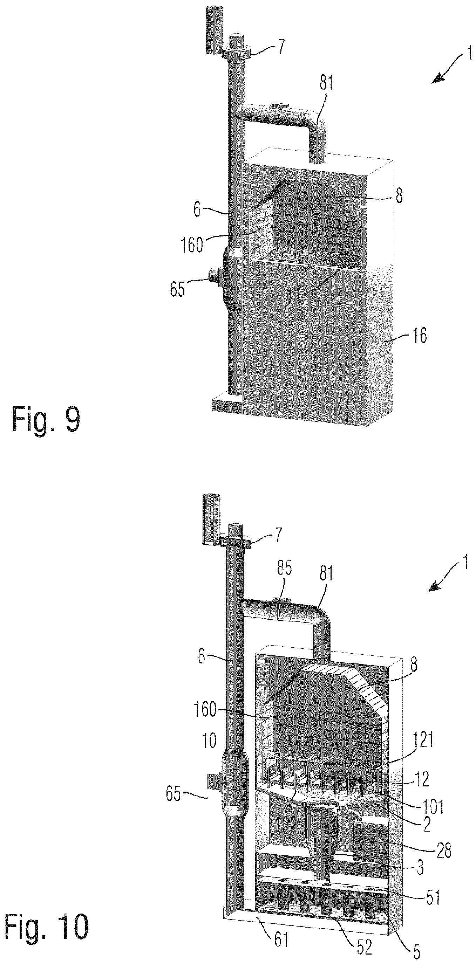

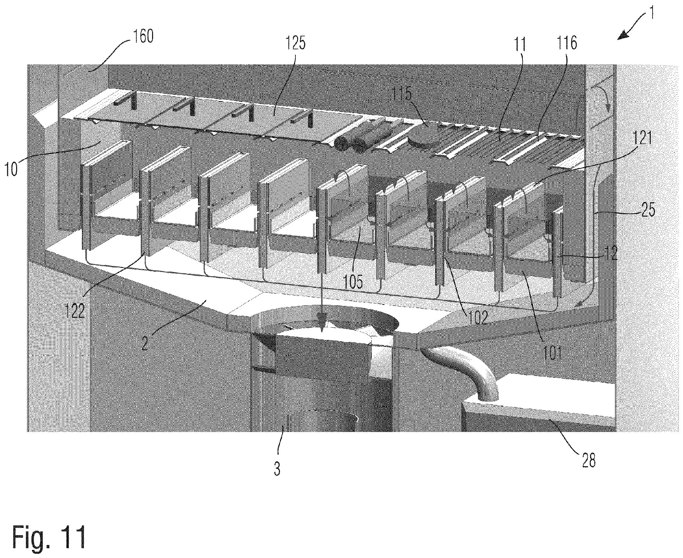

Anhand der vorstehenden Figuren 1 bis 8 wurde das Grundprinzip des erfindungsgemäßen Grills näher erläutert. Anhand der Figuren 9, 10 und 11 wird eine mögliche konstruktive Ausgestaltung näher erläutert. Dabei zeigt Fig. 9 den betriebsfertigen Grill 1 und Fig. 10 eine teilweise geschnittene Darstellung, welche den Aufbau des erfindungsgemäßen Grills 1 erkennen lässt. Fig. 11 zeigt eine vergrößerte Darstellung der Aufnahmewanne 10 mit eingesetzten Gasführungsrohren 12.

Der Grill 1 weist ein Gehäuse 16 auf, welches beispielsweise aus Stahl- oder Aluminiumblech oder auch Edelstahl gefertigt sein kann. Die einzelnen Bleche des in etwa quaderförmigen Gehäuses können in an sich bekannter Weise gefügt sein. Das Gehäuse 16 kann Revisionsöffnungen bzw. Klappen aufweisen, um die einzelnen Komponenten des Grills zur Wartung zugänglich zu halten.

Der Grill 1 weist einen Grillrost 11 auf, welcher oberhalb einer Aufnahmewanne 10 angeordnet ist. Die Aufnahmewanne 10 umfasst einen Boden 1, welcher eine Mehrzahl schlitzförmiger Öffnungen 102 aufweist. Bei Betrieb des Grills wird die Aufnahmewanne 10 mit Brennstoff gefüllt, beispielsweise Holzkohle.

Unterhalb der Aufnahmewanne 10 befindet sich die trichterförmige Oxidationskammer 2, welche ebenfalls aus Stahlblech gefertigt sein kann, um den an dieser Stelle zu erwartenden hohen Temperaturen standzuhalten. Unterhalb der Oxidationskammer 2 ist die Oxidationsmittelzufuhreinrichtung 28 angeordnet. Diese kann beispielsweise in einem Vorrat eines gasförmigen Oxidationsmittels bestehen, wie beispielsweise Sauerstoff. In anderen Ausführungsformen der Erfindung kann die Oxidationsmittelzufuhreinrichtung 28 ein an sich bekannter Ozongenerator sein, welcher in einer Hochspannungsentladung Ozon erzeugt und dieses im Betrieb des Grills der Oxidationskammer 2 zuführt.

In etwa mittig der Oxidationskammer ist deren Auslass 22 angeordnet, welcher in den zentral angeordneten Zyklonabscheider 3 mündet. Das aus dem Zyklonabscheider 3 austretende, entstaubte Abgas strömt in den Geruchsfilter 5.

Unterhalb des Geruchsfilters 5 befindet sich ein Bodenblech mit eingearbeiteten Öffnungen als Auslass 52, welcher vom Abgas durchströmt werden kann. Über den mit einem Hohlraum versehenen Sockel 61 setzt das Abgasrohr 6 an.

An dem dem Geruchsfilter 5 entfernt liegenden Ende des Abgasrohres 6 befindet sich die Fördereinrichtung 7, welche somit maximal entfernt ist von heißem Abgas, Stäuben und Fetten und somit nicht verunreinigt wird.

In der Abgasleitung 6 können weitere Komponenten 65 angeordnet sein, beispielsweise weitere Einrichtungen zur Abgasreinigung oder auch Revisionsklappen zur Reinigung des Abgasrohres 6.

Wie Fig. 9 zeigt, ist der Grillrost 11 im betriebsfertigen Zustand des Grills über eine Öffnung 160 zugänglich. Über diese Öffnung wird auch die zum Betrieb des Glutbettes 105 nötige Verbrennungsluft durch die Fördereinrichtung 7 angesaugt. Hierdurch wird das Austreten von Gerüchen in den den Grill umgebenden Raum zuverlässig vermieden.

Oberhalb des Grillrostes 11 befindet sich ein Abzugskamin 8, welcher mit einer Leitung 81 mit dem Abgasrohr 6 verbunden ist. In der Leitung 81 befindet sich eine Abgasklappe 85, welche im Normalbetrieb des Grills geschlossen ist. Hierdurch wird im Normalbetrieb von der Fördereinrichtung 7 Umgebungsluft durch die Öffnung 160 angesaugt, von oben nach unten durch den Grillrost und das Glutbett geführt und nachfolgend als Abgas durch die vorstehend beschriebene Abgasreinigungsvorrichtung gefördert. Im Falle einer Fehlfunktion kann die Abgasklappe 85 geöffnet werden, so dass die entstehenden Abgase und Schadstoffe nun in konventioneller Weise über den Abzugskamin 8 abgesaugt werden können wie anhand der Fig. 1 beschrieben. Damit ist auch im Falle einer Fehlfunktion der sichere Weiterbetrieb des Grills 1 möglich. Der Benutzer kann auf eine solche Fehlfunktion durch ein optisches und/oder akkustisches Signal hingewiesen werden, so dass eine zeitnahe Rückkehr zum Regelbetrieb möglich ist.

Wie in Figur 11 dargestellt ist, ist der Brennstoff 105 in eine Aufnahmewanne 10 eingebracht. Oberhalb des Glutbettes 105 befindet sich ein Grillrost 11. Auf dem Grillrost befindet sich das Grillgut 115. Unterhalb des Glutbettes 105 befindet sich der Boden 101 der Aufnahmewanne 10. Im Boden 101 befinden sich Öffnungen 102, wobei in zumindest eine Öffung 102 ein Gasführungsrohr 12 eingelassen ist.

Das zumindest eine Gasführungsrohr 12 kann einen polygonalen oder runden Querschnitt aufweisen. In einigen Ausführungsformen der Erfindung können die Abmessungen in den beiden Raumrichtungen der Ebene des Grillrostes 11 stark unterschiedlich sein, so dass sich der optische Eindruck eines länglichen Schlitzes ergibt. In anderen Ausführungsformen der Erfindung kann der Querschnitt auch rund sein, so dass eine Mehrzahl von Gasführungsrohren 12 in einem regelmäßigen Raster bzw. einer Matrix in der Fläche des Grillrostes 11 angeordnet sein können.

Das Gasführungsrohr kann in einigen Ausführungsformen eine Länge von etwa 15 cm bis etwa 20 cm haben. Es kann die Oberkannte des Glutbettes bzw. der Brennstoffschüttung etwa 3 cm bis etwa 6 cm überragen. Das Gasführungsrohr (12) besitzt ein erstes Ende (121) und ein gegenüberliegendes zweites Ende (122), wobei das erste Ende (121) oberhalb des Brennstoffes bzw. des Glutbettes 105 beginnt und das zweite Ende (122) unterhalb des Bodens (101) der Aufnahmewanne (10) mündet. Bei Betrieb der Fördereinrichtung (7), wird ein Luftstrom vom ersten Ende (121) zum zweiten Ende (122) durch das zumindest eine Gasführungsrohr (12) erzeugt. Dieser Luftstrom transportiert Grillraum und Gerüche vom Grillgut 115 und vom Glutbett 105 in die Oxidationskammer 2.

Die Gasführungsrohre 12 haben die Wirkung, dass eine größere Strömungsgeschwindigkeit zwischen dem Grillrost 11 und der Oxidationskammer 2 erzeugt wird, so dass entstehender Grillrauch mit größerer Effizienz abgesaugt wird. Der Grillrauch kann bereits innerhalb des Gasführungsrohres 12 durch einen innen in den Gasführungsrohren 12 angeordneten Katalysator zumindest teilweise oxidiert werden, so dass in der Oxidationskammer 2 nur noch eine geringe Schadstoffkonzentration zur Nachoxidation ansteht.

Teile des Grillrostes, welche nicht in Benutzung sind, können durch Deckel 125 teilweise verschlossen werden, welche auf dem Grillrost 11 aufliegen. Weiterhin befinden sich am Grillrost optionale Leitbleche 116 oberhalb des ersten Endes 121 der Gasführungsrohre 12, welche ein unmittelbares Eindringen von abtropfenden Fett verhindern. Dadurch kann die Lebensdauer der Gasführungsrohre 12 bzw. des im Inneren angeordneten Katalysators verlängert werden.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen oder "erste" und "zweite" Merkmale definieren, so dient diese Bezeichnung der Unterscheidung zweier gleichartiger Ausführungsformen, ohne eine Rangfolge festzulegen.

## Patentansprüche

**1.** Grill (1) mit zumindest einer Aufnahmewanne (10) für Brennstoff und mit zumindest einem optionalen Grillrost (11), welcher über der Aufnahmewanne (10) angeordnet ist, wobei der Boden (101) der Aufnahmewanne (10) mit zumindest einer Öffnung (102) versehen ist, **dadurch gekennzeichnet, dass**
der Grill weiterhin zumindest ein Gasführungsrohr (12) mit einem ersten Ende (121) und einem gegenüberliegenden zweiten Ende (122) enthält, wobei das erste Ende (121) oberhalb des Brennstoffes beginnt und das zweite Ende (122) unterhalb des Bodens (101) der Aufnahmewanne (10) mündet und wobei
der Grill weiterhin eine Fördereinrichtung (7) enthält, welche dazu eingerichtet ist, einen Luftstrom vom ersten Ende (121) zum zweiten Ende (122) durch das zumindest eine Gasführungsrohr (12) zu erzeugen.

**2.** Grill nach Anspruch 1, **dadurch gekennzeichnet, dass** unterhalb der Aufnahmewanne (10) eine Oxidationskammer (2) mit einem Einlass (21) und einem Auslass (22) angeordnet ist, wobei dem Einlass das aus der Öffnung (102) der Aufnahmewanne (10) und/oder das aus dem zweiten Ende (122) des Gasführungsrohres (12) austretende Abgas (82) zuführbar ist.

**3.** Grill nach Anspruch 2, weiterhin enthaltend eine Oxidationsmittelzufuhreinrichtung (28), mit welcher der Oxidationskammer (2) ein Oxidationsmittel (25) zuführbar ist und/oder

**3.** weiterhin enthaltend zumindest eine zusätzliche Energiequelle, welche dazu eingerichtet ist, der Oxidationskammer (2) Wärme zuzuführen.

**4.** Grill nach einem der Ansprüche 1 bis 3,**dadurch gekennzeichnet, dass** das Gasführungsrohr (12) einen rechteckigen Querschnitt aufweist.

**5.** Grill nach einem der Ansprüche 1 bis 4, **dadurch gekennzeichnet, dass** im Gasführungsrohr (12) zumindest ein Katalysator (13) angeordnet ist oder
dass im Gasführungsrohr (12) zumindest ein EdelmetallKatalysator angeordnet ist.

**6.** Grill nach einem der Ansprüche 1 bis 5, weiterhin enthaltend einen Zyklonabscheider (3) mit einem Einlass (31) und einem Auslass (32), wobei der Auslass (22) der Oxidationskammer (2) mit dem Einlass (31) des Zyklonabscheiders (3) verbunden ist.

**7.** Grill nach einem der Ansprüche 1 bis 6, weiterhin enthaltend einen Wärmetauscher (4) mit einem Einlass (41) und einem Auslass (42), wobei der Einlass (41) des Wärmetauschers (4) mit dem Auslass (22, 32) der Oxidationskammer (2) und/oder des Zyklonabscheiders (3) verbunden ist.

**8.** Grill nach einem der Ansprüche 1 bis 7, weiterhin enthaltend einen Geruchsfilter (5) mit einem Einlass (51) und einem Auslass (52), wobei der Einlass (51) des Geruchsfilters (5) mit dem Auslass (22, 32, 42) der Oxidationskammer (2) und/oder des Zyklonabscheiders (3) und/oder des Wärmetauschers (4) verbunden ist.

**9.** Grill nach einem der Ansprüche 1 bis 8, **dadurch gekennzeichnet, dass** am Auslass (22, 32, 42, 52) der Oxidationskammer (2) und/oder des Zyklonabscheiders (3) und/oder des Wärmetauschers (4) und/oder des Geruchsfilters (5) ein Abgasrohr (6) ansetzt, in welchem die Fördereinrichtung (7) angeordnet ist.

**10.** Grill nach Anspruch 9, weiterhin enthaltend einen Abzugskamin (8), welcher oberhalb des Grillrostes (11) angeordnet ist und welcher mit einer Leitung (81) mit dem Abgasrohr (6) verbunden ist, wobei in der Leitung (81) eine Abgasklappe (85) angeordnet ist.

**11.** Verfahren zum Grillen, bei welchem das Grillgut (115) auf einem Grillrost (11) über einem Glutbett (105) angeordnet wird, wobei das Glutbett in einer Aufnahmewanne (10) angeordnet ist und der Boden (101) der Aufnahmewanne (10) mit zumindest einer Öffnung (102) versehen ist, **dadurch gekennzeichnet, dass**
der Grill weiterhin zumindest ein Gasführungsrohr (12) mit einem ersten Ende (121) und einem gegenüberliegenden zweiten Ende (122) enthält, wobei das erste Ende (121) oberhalb des Glutbettes (105) beginnt und das zweite Ende (122) unterhalb des Bodens (101) der Aufnahmewanne (10) mündet, wobei mittels einer Fördereinrichtung (7) ein Luftstrom durch den Grillrost (11), das Glutbett (105), das zumindest eine Gasführungsrohr (12) und die Öffnung (102) der Aufnahmewanne (10) erzeugt wird.

**12.** Verfahren nach Anspruch 11, **dadurch gekennzeichnet, dass** dem unterhalb der Aufnahmewanne (10) durch die Öffnung (102) und/oder aus dem zweiten Ende (122) des Gasführungsrohres (12) austretendem Abgas (82) ein Oxidationsmittel (25) zugeführt wird oder
dass dem unterhalb der Aufnahmewanne (10) durch die Öffnung (102) austretendem Abgas (82) Ozon zugeführt wird.

**13.** Verfahren nach einem der Ansprüche 11 oder 12, **dadurch gekennzeichnet, dass** das Abgas (82) einem Zyklonabscheider (3) zugeführt wird und/oder

**13.** dass das Abgas (82) einem Wärmetauscher (4) zugeführt wird.

**14.** Verfahren nach einem der Ansprüche 11 bis 13, **dadurch gekennzeichnet, dass** das Abgas (82) einem Geruchsfilter (5) zugeführt wird oder
das Abgas (82) in einem ersten Verfahrensschritt einem Geruchsfilter (5) zugeführt wird, welcher mit Aktivkohle und/oder Holzkohle und/oder Holzkohlebriketts als Filtermaterial bestückt ist und das Filtermaterial in einem zweiten Verfahrensschritt dem Glutbett (105) zugeführt wird.

**15.** Verfahren nach einem der Ansprüche 11 bis 14, **dadurch gekennzeichnet, dass** die Fördereinrichtung (7) einen ersten Betriebszustand und einen zweiten Betriebszustand aufweist, wobei die geförderte Gasmenge im ersten Betriebszustand höher ist als im zweiten Betriebszustand
